(19) Europäisches Patentamt
European Patent Office
Office européen des brevets

(11) **EP 2 123 618 A1**

(12) **EUROPEAN PATENT APPLICATION**

(43) Date of publication:
**25.11.2009 Bulletin 2009/48**

(51) Int Cl.:
*C04B 38/06* (2006.01)     *B01D 39/20* (2006.01)
*B01J 35/00* (2006.01)     *B01J 37/02* (2006.01)

(21) Application number: **08156090.6**

(22) Date of filing: **13.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
- **L'AIR LIQUIDE, Société Anonyme pour l'Etude et l'Exploitation des Procédés Georges Claude**
  **75007 Paris (FR)**
- **Centre National de la Recherche Scientifique**
  **75794 Paris Cedex 16 (FR)**
- **Université de Limoges**
  **87032 Limoges (FR)**

(72) Inventors:
- **Del-Gallo, Pascal**
  **91410, Dourdan (FR)**

- **Cornillac, Mathieu**
  **75321, Paris Cedex 07 (FR)**
- **Rossignol, Fabrice**
  **87430, Verneuil sur Vienne (FR)**
- **Faure, Raphael**
  **Ecole Nat. Sup. des Céramiques Industrielles**
  **47-73 Av.Albert Thomas**
  **87065, Limoges Cedex (FR)**
- **Chartier, Thierry**
  **87220, Feytiat (FR)**
- **Gary, Daniel**
  **78180, Montigny le Bretonneux (FR)**

(74) Representative: **Conan, Philippe Claude et al**
**L'Air Liquide**
**D.S.P.I.**
**75, quai d'Orsay**
**75321 Paris Cedex 07 (FR)**

(54) **Ceramic foam with gradient of porosity in heterogeneous catalysis**

(57) The invention relates to an architecture comprising ceramic or metallic foam, **characterized in that** the foam has at least one continuous and/or discontinuous, axial and/or radial porosity gradient ranging from 10 to 90%, and a pore size from 2 ppi to 60 ppi, and in that the architecture has a microstructurc comprising specific area ranging between 0,1 to 30 $m^2/g$, a grain size between 100 nm and 20 microns and a skeleton densification above 95%.

One process to obtain this architecture can be based on the preparation of a ceramic foam with porosity gradient comprising: choosing at least one polymeric sponge, impregnation of the polymeric sponge by a ceramic slurry, drying of the impregnated sponge, pyrolysing the organics including the polymeric sponge, and sintering, and **characterized in that** we realize a pre-step to obtain a continuous and/or discontinuous porosity gradient.

Figure 1c

**Description**

The invention relates to an architecture comprising ceramic or metallic foam, **characterized in that** the foam has at least one continuous and/or discontinuous, axial and/or radial porosity gradient ranging from 10 to 90%, and a pore size from 2 ppi to 60 ppi, and in that the architecture has a microstructure comprising specific area ranging between 0,1 to 30 $m^2/g$, a grain size between 100 nm and 20 microns and a skeleton densification above 95%.

One process to obtain an architecture as taught by the invention can be based on the preparation of a ceramic foam support with a continuous and/or discontinuous porosity gradient comprising: choosing at least one polymeric sponge, impregnation of the polymeric sponge by a ceramic slurry, drying of the impregnated sponge, pyrolysing the organics including the polymeric sponge, and sintering, and **characterized in that** we realize a pre-step to obtain a continuous and/or discontinuous porosity gradient.

Porous ceramics have physical-chemical properties, whether thermal stability, chemical stability, bio-compatibility or mechanical strength, which make them good candidates for various applications such as filter membranes, sensors, ceramic-to-metal seals, biomaterials, energy conservation, thermal insulation or catalysis. These materials are used in particular for their low density, their high exchange area and their high permeability thanks to their open porosity.

As techniques for creating porosity in a ceramic, there are:

- uncomplete sintering of ceramic particles;
- introduction of porosity by an emulsion of the material before sintering;
- use of pore formers removed before sintering;
- forming operations such as extrusion, injection molding, rapid prototyping; and
- the use of ceramic fibers.

These methods are listed in Roy W.Rice, "Porosity of ceramics", Marcel Dekker, 1998, pp 20-21.

The use of pore formers, removed for example by pyrolysis before sintering, and leaving pores as the negative thereof in the ceramic, is one of the most appropriate methods for producing materials whose porosity is controlled in terms of volume fraction, shape and size distribution of the pores. Incorporating particulate pore formers, such as starch, lattices, graphite or resins into ceramic suspensions or slurries makes it possible to obtain uniformly distributed open pores in a dense ceramic matrix. Depending on the forming method - pressing, casting in a mold, tape casting, extrusion or injection molding - a material is obtained with a plane geometry, a tubular geometry or a geometry of more complex shape.

Several embodiments of this technique of incorporating pore-forming particles into a ceramic suspension are disclosed in United States patents published under the numbers US 4,777,153, US 4,883,497, US 5,762,737, US 5,846,664 et US 5,902,429 and in the publications by Lykfeldt et al. and Apté et al. (O. Lyckfeldt, E.Liden, R.Carlsson, "Processing of thermal insulation materials with controlled porosity", Low Expansion Materials, pp 217-229; S. F. Corbin, P.S. Apté, J.Am.Ceram.Soc, 82, 7, 1999, pp 1693-1701). Apté et al. describe in particular a method using the tape casting of ceramic suspensions containing pore-forming particles and the thermo-compression of the tapes in order to obtain, after sintering, a porous material with a discrete porosity gradient.

US 4, 780, 437 discloses a method for preparing thin porous materials by infiltration of a flocking of pyrolyzable pore-forming fibers by a ceramic suspension. The materials obtained by this method have oriented anisotropic pores.

FR 2,817,860 discloses a method for preparing a thin ceramic material with controlled surface porosity gradient, including (A) infiltrating a porous pore-forming substrate of controlled thickness, with a ceramic suspension; (B) evaporating the solvent; (C) a step which includes eliminating the pore-forming agents and the various organic additives, and (D) a sintering step.

On the other hand, FR 2,817,860 teaches that the infiltration of polymer foams by a ceramic suspension is used to obtain bulk ceramics having a substantial open porosity.

In the case of heterogeneous catalytic reactors (especially for endothermic reactions such as steam reforming, dry reforming, etc), the temperature of the bed has a direct influence on the performances of the process. The yield is directly linked to the temperature of the catalytic bed. Consequently, an optimized heat transfer (in such a way that heat losses are minimized inside the catalytic bed) from the wall of the vessel to the core of the catalytic bed is required.

So, a problem is to provide an architecture allowing a good heat transfer.

A solution of the present invention is an architecture comprising ceramic or metallic foam, **characterized in that** the foam has at least one continuous and/or discontinuous, axial and/or radial porosity gradient ranging from 10 to 90%, and a pore size from 2 ppi to 60 ppi, and in that the architecture has a microstructure comprising specific area ranging between 0,1 to 30 $m^2/g$, a grain size between 100 nm and 20 microns and a skeleton densification above 95%.

Preferably, the architecture is in itself a stand catalytic active bed or a support on which a active catalytic layer may be deposited.

Another embodiment of the present invention is a process for the preparation of a ceramic foam having at least one continuous and/or discontinuous, axial and/or radial porosity gradient ranging from 10 to 90%, and a pore size from 2 ppi to 60 ppi, comprising the following successive steps:

a) Choosing at least one polymeric sponge, with a continuous and/or discontinuous porosity gradient ranging from 10 to 90%, associated to a pore size from 2 ppi to 60 ppi.
b) Preparing the ceramic slurry with ceramic particles, solvent and at least an organic and/or inorganic additive,
c) Impregnation of the polymeric sponge of the step a) by the ceramic slurry of the step b),
d) Drying of the impregnated polymeric sponge,
e) Pyrolysing the organic compounds including the dried polymeric sponge, and
f) Sintering the ceramic particles after the step e),

**characterized in that** a pre-step of formation of a porosity gradient on the sponge is introduced before the step a), and provided that if the polymeric sponge of step a) does not have a porosity gradient, the pre-step is compulsory.

According to particular embodiments of the present invention, the process is characterized by the following characteristics:

-   the pre-step is chosen among:

    ■ thermo-compressing one edge of the polymeric foam to induce a higher deformation of a given part of the foam; or
    ■ piling up sponges with different porosities; or
    ■ stacking sponges cylinders with different porosity, the inner cylinders being joined to the outer ones;

-   the porosity gradient is axial and radial;
-   the polymeric sponge is in a material selected among poly(urethane), poly(vinyl chloride), polystyrene, cellulose and latex, preferably in poly(urethane);
-   ceramic particles have a size between 100 nm and 10 microns and that the ceramic slurry contains between up to 60 vol.% of ceramic particles;
-   the step b) the additive is chosen among binders, rheological agents, antifoaming agents, wetting agents, flocculating agents, air-setting agents and dispersing agents;
-   after the step c) the impregnated foam can be compressed, centrifuged or passed through rollers;
-   the ceramic particles are oxide-based materials selected among or a mixture of: alumina ($Al_2O_3$) and/or doped-alumina (La(1 to 20 wt.%)-$Al_2O_3$, Ce-(1 to 20 wt.%)-$Al_2O_3$, Zr(1 to 20 wt.%)-$Al_2O_3$), magnesia (MgO), spinel ($MgAl_2O_4$), hydrotalcite, CaO, zinc oxide, cordierite, mullite, aluminum titanate, and zircon ($ZrSiO_4$);
-   the ceramic particles are non-oxide-based materials selected among or a mixture of : silicon carbide (SiC), silicon nitride ($Si_3N_4$), SiMeAlON materials where Me is a metal such Y and La;
-   the ceramic particles_are in a ionic conductive oxide selected among Ceria ($CeO_2$), Zirconia ($ZrO_2$), stabilized ceria ($Gd_2O_3$ between 3 and 10 mol% in zirconia) and zirconia ($Y_2O_3$ between 3 and 10 mol% in zirconia) and mixed oxides of the formula (I):

$$Ce_{(1-x)} Zr_x O_{(2-\delta)} \qquad (I),$$

wherein $0 < x < 1$ and $\delta$ ensures the electrical neutrality of the oxide, or doped mixed oxides of the formula (II):

$$Ce_{(1-x-y)} Zr_x D_y O_{2-\delta} \qquad (II),$$

wherein D is selected from Magnesium (Mg), Yttrium (Y), Strontium (Sr), Lanthanum (La), Presidium (Pr), Samarium (Sm), Gadolinium (Gd), Erbium (Er) or Ytterbium (Yb); wherein $0 < x < 1$, $0 < y < 0;5$ and $\delta$ ensures the electrical neutrality of the oxide;
-   the ceramic particles includes an active phase based selected from Ruthenium (Ru), Rhodium (Rh), Palladium (Pd), Rhenium (Re), Osmium (Os), Iridium (Ir) Platinum (Pt) or combinations thereof;
-   the ceramic particles includes an active phase based selected from Nickel (Ni), Cobalt (Co), Copper (Cu), Iron (Fe), Chromium (Cr) and/or noble metal(s) selected from Rh, Pt, Pd, or combinations thereof.

In fact, in the case of a foam used as a stand alone catalytic active support for the catalytic reactions to proceed, the ceramic particles (raw matter) can be:

- ionic conductive oxides including: noble metal(s) Me selected from Ru, Rh, Pd, Re, Os, Ir, Pt or combinations thereof, or
- Hydrotalcite based on transition metal(s) Me selected from Ni, Co, Cu, Fe, Cr and/or noble metal(s) (selected from Rh, Pt, Pd), or combinations thereof, or
- alumina ($Ni_xAl_{2-x}O_3$) or spinel ($Ni_xMg_{1-x}Al_2O_4$) based on transition metals (Nickel (Ni), Cobalt (Co), Copper (Cu), Iron (Fe), Chromium (Cr)).

In the case of a foam used as a catalytic support hosting a catalytic layer for the catalytic reactions to proceed, the ceramic particles (raw matter) can be oxide-based material(s) non active and active (ionic conductive oxides) or non-oxide-based material(s).

Another embodiment of the present invention is a ceramic foam with a longitudinal and/or radial, continuous and/or discontinuous porosity gradient obtainable by the process according to the invention.

Another embodiment of the present invention is a metallic foam with a longitudinal and/or radial continuous and/or discontinuous porosity gradient.

Another embodiment of the present invention is the use of the ceramic or metallic foam according to claim 15 or claim 16 in heterogeneous catalysis.

Preferably, ceramic or metallic foam is used as a catalytic active bed in hydrocarbons Steam Reforming, hydrocarbons catalytic partial oxidation or hydrocarbons dry reforming, or as a catalytic active bed in methanol production, methanol transformations, or oxidative reactions.

Foams have been widely studied since a few decades. Several papers reporting their advantage over conventional powder bed and extruded-supported catalysts were recently reviewed. It has been demonstrated that a higher turbulence of the stream was created through foams causing higher mass and temperature transfer and lower pressure drop compared to powder beds and honey-combs supported catalysts. The high porosity of open-cell foams is the most significant property, which direct consequence is a much lower pressure drop inside the reactor. Such characteristics are also found in monolithic structures with uniform, parallel channels with respect to honey-combs monoliths. However such materials have laminar flow patterns without lateral mixing between cells, whereas foams have extensive pore tortuosity that enhances turbulence, mixing and transport. Such ceramic foams are currently prepared by slurry impregnation of a sponge-like template.

The denomination 'Porous ceramics' generally refers both to open-cell and closed cell ceramics. Ceramic foams can be defined as highly porous open-cell ceramic materials. They can be either produced by direct foaming of ceramic slurry, by impregnation of an organic template or by using pore formers that leave pores once burst.

The polymeric sponge is the template that is duplicated by impregnation of a ceramic slurry. The pore-size of the sponge determines the pore size of the final product after firing (between 2 ppi and 60 ppi). Different polymeric materials can be used as templates (basically: poly(urethane) (PU), poly(vinyl chloride) (PVC), poly(styrene) (PS), cellulose, latex) but the choice of the ideal sponge is limited by severe requirements. The polymeric sponge must be elastic enough to recover it initial shape without being irreversibly deformed after being compressed during the impregnation process. It should have at least a few hydrophobic/hydrophilic interactions with the slurry solvent to retain the slurry. It should volatilize at low temperature, below that required to sinter the ceramics. However the 'softening' temperature must be high enough not to favour the collapsing of the structure during the pyrolysis/sintering step. As the organic template is pyrolysed, it must not released toxic compounds; for instance PVC is avoided because of HCl is released during pyrolysis.

PU foams are commercially available in a large range of porosity at low costs. Basic foams are fabricated and distributed by companies such as FoamPartner (D) or Recticel (F). It is smooth enough to be deformed and recover its initial shape after impregnation. It is also strong enough to keep its original shape once impregnated. Different kinds of PU exist, named ester-type, ether-type, or ether-ester-type, owing to the nature of the lateral chain of the polyol polymerised with the isocyanate. Even if the polymer is globally hydrophobic, the lateral chains confer hydrophilic (ester) or hydrophobic (ether) properties to the polymer. It has to be noted that NOx are released during the pyrolysis.

Any other foam (except PS) is not really commercially available. And PS is not smooth enough to be compressed during the impregnation step.

PU foams are today the most commonly used polymeric templates to produce ceramic foams. However, in some specific cases, pre-ceramic sponge-like polymers, such as poly(silanes) and poly(carbosilanes), can be used to prepare specific ceramic foams, in this case silicon carbide foams.

Wettability measurements of alumina slurries on PU foams was recently reported (study realised by Recticel-IDC, B). Different PU foams (ether-type, ester-type, ester/ether-type) compositions were used.

As the evaluation of wetting by contact angles measurements on felted PU sheets (PU foams compressed at 180-200˚C into plate or sheet), direct observation of the coating with stereomicroscopy was used. It was reported that only hydrophilic ester-type PU foam gives improved wetting. To a lower extent, the use of wetting agent was investigated, and great improvement of the coating ability was noted. Finally, modifications of the PU foams were also reported to highly improve the coating by the slurry, and so too increase the final strength of the impregnated ceramic foam. PU foams were treated by first bathing for 24h in 1M NaOH solution, to enhance the surface coarseness, followed by treating with a silica sol to modify the template surface from an hydrophobic to an hydrophilic nature. After having chosen the template, the preparation of the ceramic slurry is the next key step of the processing of ceramic foams.

The ceramic slurry is made of finely divided and homogeneously distributed ceramic particles, solvent(s) and additives. The choice of any of these components is important in the formulation of the slurry.

The slurry also withstands severe requirements. The slurry must be fluid enough to impregnate the template but it must also be viscous enough once impregnated to be retained on the template. The ceramic particles must be homogeneously dispersed in the slurry. The size of the particles must be fine enough to favour the sintering process. But if the particles are too small, vermicular porosity can developed. Ideal size for sintering is generally closed to a few microns.

The slurries contain very variable ceramic particles weight percents, usually ranging up to 60vol%. Slurries become more and more viscous for higher ceramic particles contents, leading to increased slurry loading on the template.

In order to improve the formulation of the slurry regarding the quality of the washcoat, additives (dispersants, binders, rheological agents, antifoaming agents, wetting-agents, flocculating agents and air-setting agents) can be used. Different additives can be added to the ceramic particles and to the solvent, in order to:

- stabilize the suspension,
- favour the uniform coating of the template,
- increase the adhesion of the slurry on the template, and
- let the foam-cells open after the slurry-coating of the template.

Binders strengthen the ceramic structure after drying and prevent the foam from collapsing during the pyrolysis of the organic sponge. Different kinds of binders are used:

organics (poly(ethylene)oxide, poly(vinyl)alcool, gelatine) and inorganics (potassium or sodium silicates, aluminium orthophosphate, magnesium orthoborate). Organic binders are advantageously eliminated from the sintered ceramic material, whereas inorganic binders stay in/on the material.

Inorganic binders were the first to be used in slurry formulations for impregnation of polymeric sponges. The binders used were potassium or sodium silicate, aluminium orthophosphate or inorganic gels, such as alumina hydrates or silica hydrates.

Today most commonly used binders are organic binders such as gelatine, poly(ethylene)oxide or poly(vinyl) alcool. The beneficial effect of poly(ethylene)oxide (average molecular weight = 100 000) on the coherent and homogeneous coating of a poly(urethane) foam has been reported to be optimum at around 1wt% of the powder amount, for alumina slurries.

Poly(ethylene)oxide and poly(vinyl)alcool could also have a role in the rheological behaviour of the slurries. But generally the rheology of the slurries is controlled by the use of rheological agents.

The slurry must be fluid enough to enter in the organic sponge and must be viscous enough once coated on the support not to drain out of the sponge. Such thixotropic properties can be brought to the slurry by rheological agents, which can be different from binders. Once again, inorganic or organic rheological agents can be used, with the same advantage for the organic ones as mentioned before.

Inorganic rheological agents generally used to promote thixotropy are bentonite and kaolin clays. These agents are added typically in the amount 0,1 to 12wt% of the total weight of the slurry. Other agents were also tested: zinc oxide and calcium oxide also appeared to lead to a thixotropic behaviour.

Organic rheological agents, such as carboxymethylcellulose, were used in various amounts to enhance the coating of some mullite slurries on PU foams.

Anti-foaming agents are added to prevent the slurry from foaming (example: BYK035 by BYK-Chemie). During the successive impregnation/compression to impregnate the polymeric sponge and to expulse the slurry excess, bridges or windows appear. They are hard to remove, especially when the slurry dry easily, and lead to semi-closed cells.

Impregnation of organic templates is an easy process, as the template is smooth enough to be compressed. Several impregnations can be required if the slurry coverage is insufficient to cover the template or if strong ceramic foams (with increased struts-width) are prepared. But problems appear when several impregnations are required: once impregnated and dried, the foam becomes hard and compressions lead to cracks in the first dried impregnation. To reduce the number of required impregnation, the wettability of the slurry on the template must be improved. To do so, we can either decide to modify the support (as previously seen for PU templates), or to modify the slurry formulation by adding wetting agents.

The wetting agents allow increasing the hydrophobic interactions between the support and the slurry, thus leading to increase slurry loading from the first impregnation.

Floculating agents can be added to the slurry formulation. Local flocculation of the ceramic particles by the addition of poly(ethyleneimine) (0,005wt% to 1wt%) results in improved adherence of the slurry on the polyurethane template.

Air-setting agents are used to consolidate the ceramic slurry impregnated prior to sintering. The resulting increased cohesion of the coating prevents from creation of cracks during handling, and from the collapse of the foam while the PU template is pyrolysed. The most commonly used setting agents are aluminium orthophosphate, aluminium hydroxychloride and magnesium orthoborate.

Agglomerates could appear when the colloidal ceramic suspensions used for the impregnation of the PU foams are not stable, leading to non uniform coatings. Dispersing agents are added to the slurry to stabilise the suspension by helping in dispersing the ceramic particles, preventing them from agglomeration. Generally, ceramic suspensions can be dispersed by electrostatic, steric or electrosteric stabilisation mechanisms. Electrostatic stabilisation is achived by generating a common surface charge on the particles. Steric stabilisation is achieved by adsorption of polymers on the particle surface.

Finally, electrosteric stabilisation requires the presence of both polymers adsorbed on the particle surface and of electrical double layer repulsion. Optimum sodium poly(methacrylate) PMAA-Na adsorption on $\alpha$-alumina particles and zero point of charge on its surface were studied following the pH of the slurries. Following the pH, the fraction of dissociated PMAA-ONa (charged groups) and non-dissociated PMAA-OH varies, changing the average charge on the particles surface. Then, at a given pH, the stability of a suspension corresponds to the adsorption limit of the PMAA on the alumina particles. Moreover, the more concentrated the slurry (powder loading), the more reduced pH range, for stabilizing the slurry. Of course, the amount of dispersing agent adsorbed will vary owing to the specific surface area of the powder dispersed. Thus, pH and specific surface area of powders have to be taken into account to optimize the use of dispersing agents.

Once the polymeric template has been chosen and the ceramic slurry has been prepared, the next step is the impregnation of the template with the ceramic slurry. Typically, total impregnation of the polymeric template is achieved by compressing the foam, expulsing the air inside, and immersing it into the slurry. Then the foam is allowed to expend. Once immersed in the slurry, several compressions could be required, especially if the slurry is too viscous. No specific requirements are attached to this step.

Another key step of the preparation of ceramic foams is coming then: after being impregnated, it is required to expulse the excess of slurry from the polymeric sponge, to leave the cells open. Even if this can be done by manually pressing the foam, reproducibility and large scale production required the development of several processes dedicated to achieve this step. Several methods are reported.
The impregnated foam can be:

- compressed between to boards,
- centrifugated, or
- passed through rollers
- Blown by air or any other carrier gas jets whatever their temperature
  The method using boards rapidly appeared to be limited. The centrifugation process is really efficient to manufacture small samples, but it becomes impossible to produce large samples, as the centrifugation apparatus size is limited. Rollers can be used without limits of sample-size. The compression strength imposed by the rollers on the impregnated foam allows regulating the amount of slurry expulsed and redistributing the slurry within the polymeric foam webs. Weighting of the foam and calculation of the wt% loading (mass of the slurry coated per mass unit of the polymeric sponge) are then parameters to optimise.
  Once impregnated, the foam is dried to evaporate the solvent and to leave a dense coating on the polymeric sponge, made of organics (additives) and ceramic particles physically bounded together. No specific cares have to be taken, except in the temperature (when dried in oven). A specific attention has to be paid to regulate the humidity and temperature profiles to prevent from cracking. The typical temperature range is between 40 to 80˚C with a humidity decreasing down to zero. However it has to be noted that cracks could appear during the drying process. Shrinkage of the slurry upon drying (while the PU template remains fixed) could cause cracks of the coating. In the case of soft PU foams, the modulus is very low, about 0,045 GPa, and so it should offer little resistance to the shrinkage of the coating.
  Once dried, the green ceramic foam must be pyrolysed to remove the organics, including the PU template.
  The final step of the ceramic foam processing is the sintering of the ceramic particles that have been previously coated on the template. The exact temperature, time and atmosphere depend on the starting ceramic material and on the desired final propertied (the raw material grain size, initial specific surface area, surface properties...). A typical sintering temperature for sintering a submicron alumina with a densification above 95% is typically 1600˚C for 2 hours.

The foam can be designed in such a way that its porosity can be controlled along the radial and/or longitudinal directions towards the gas flow. As a result, the turbulence and the catalytic activity can be controlled throughout the global height of the reactor. Such porosity gradients can be processed by different strategies detailed thereafter.

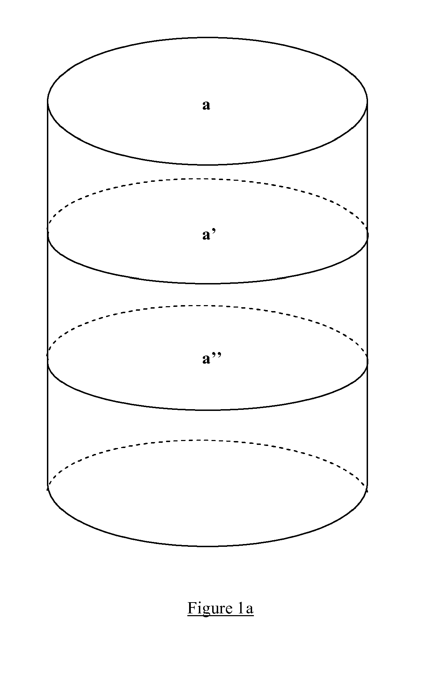

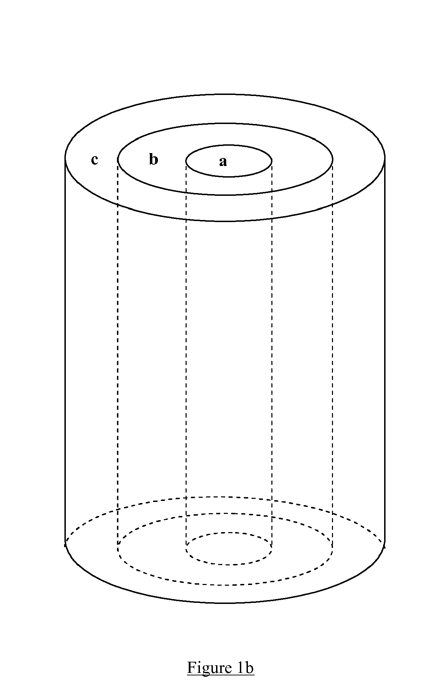

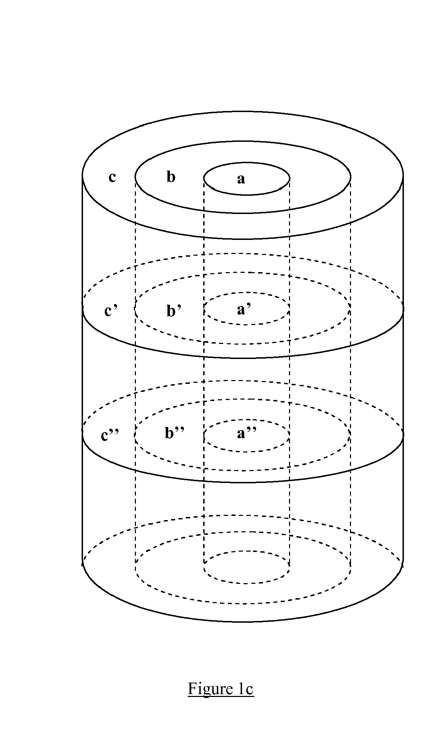

- To obtain a discontinuous axial porosity gradients within the catalytic bed, it is possible to (figures 1a, 1b and 1c):

  ○ prepare ceramic foams by slurry impregnation of templates presenting a discontinuous porosity gradient. Such template can be polymeric foam with pre-existing discontinuous porosity gradient, or a pore-making agent (e.g. polymeric spheres) made of sacrificial particles of different sizes and/or heterogeneous volume distribution.
  ○ pile up ceramic foams with different porosities,

  Figure 1a shows a ceramic foam with an axial discontinuous porosity gradient: the porosity of the section (a) is different of the porosity of the section (a'), which is different of the porosity of the section (a") and 10% < a, a',a"< 90%.
  Figure 1b shows a ceramic foam with an radial discontinuous porosity gradient : the porosity of the section (a) is different of the porosity of the section (b), which is different of the porosity of the section (c) and 10% < a, b, c < 90%.
  Figure 1c shows a ceramic foam with an axial discontinuous porosity gradient: the porosity of the section (a) is different of the porosity of the section (a'), which is different of the porosity of the section '(a") and 10% < a, a',a"< 90%, and the porosity of the section (a) is different of the porosity of the section (b), which is different of the porosity of the section (c) and 10% < a, b, c < 90%.

- To obtain a discontinuous radial porosity gradient, it is possible to:

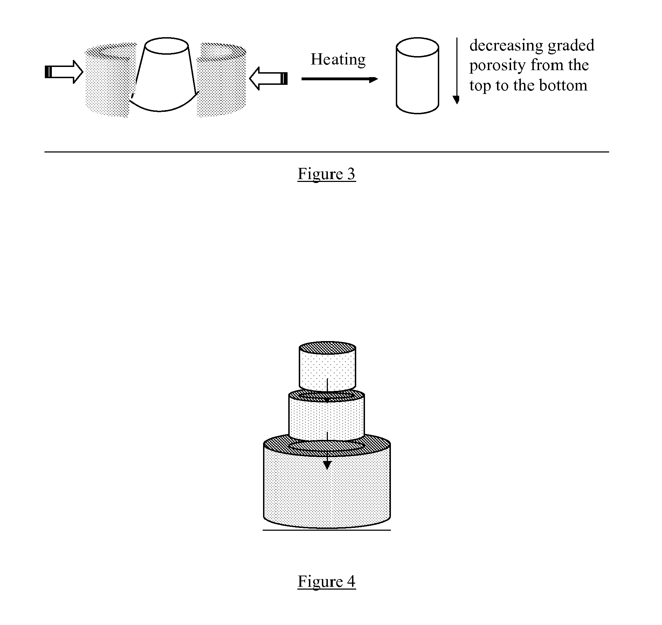

  ○ embed concentric ceramic foam cylinders with different porosity, the inner cylinders being joined to the outer ones (figure 4).
  ○ slurry-impregnate a sponge-like template with a discontinuous radial porosity gradient. Polymeric foam templates can be used to do so. Such polymeric template with a discontinuous radial porosity gradient can be produced by polymerisation of polymer precursors. Another solution to produce porosity-graded templates consists in embedding sponge-like concentric polymeric cylinders with different porosities, inducing a discontinuous porosity gradient.

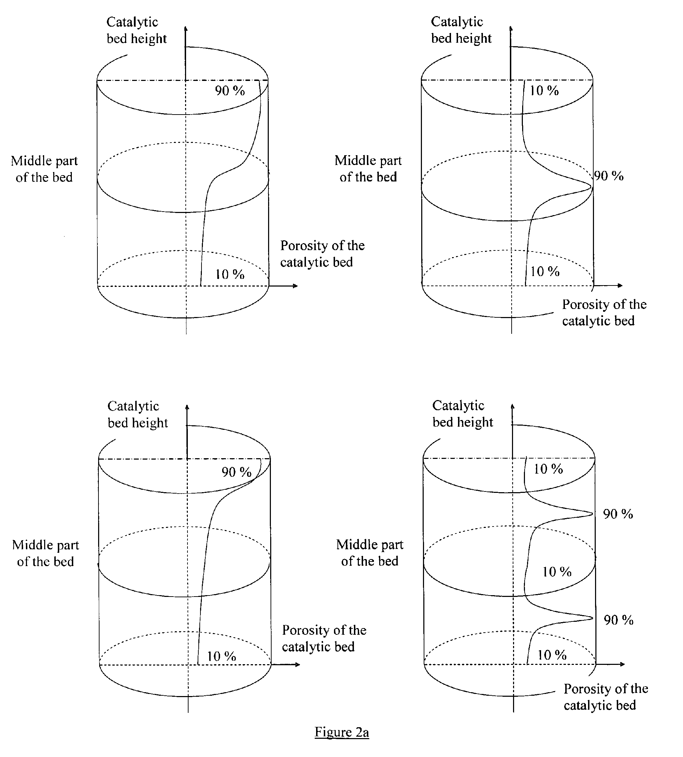

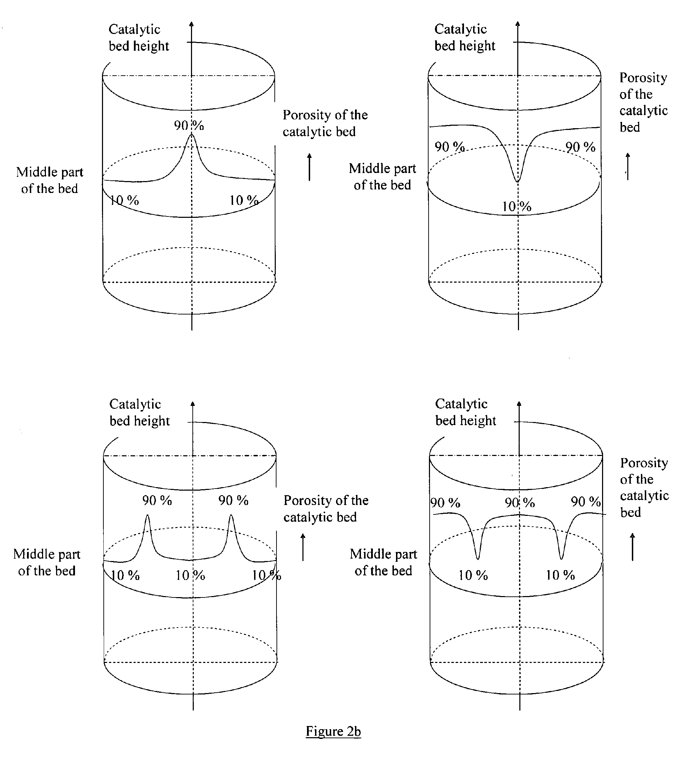

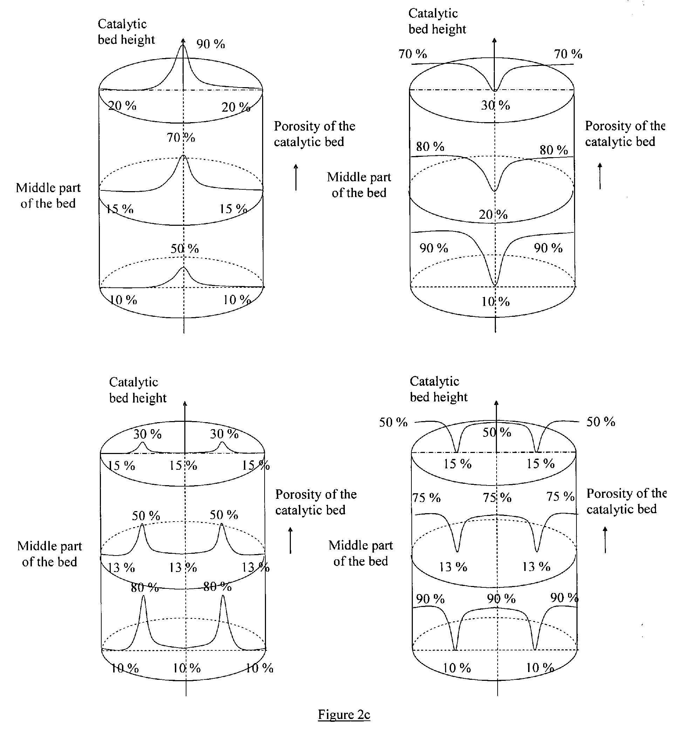

- To obtain a continuous longitudinal gradient (figures 2a, 2b and 2c), it is possible to slurry-impregnate a sponge-like template exhibiting a longitudinal and/or axial continuous porosity. Polymeric foam templates can be used to do so. Such polymeric template with a longitudinal and/or axial continuous porosity gradient may be produced by polymerisation of polymer precursors. Another solution to produce porosity-graded templates consists in thermo-compressing one edge of the polymeric foam to induce a higher deformation of a given part of the foam, inducing a continuous porosity gradient (figure 3).

  Figure 2a shows a ceramic foam with an axial continuous porosity gradient.
  Figure 2b shows a ceramic foam with an radial continuous porosity gradient.
  Figure 2c shows a ceramic foam with an axial continuous porosity gradient and an radial continuous porosity gradient.

- To obtain a continuous radial porosity gradient, it is possible to slurry impregnate a sponge-like template with a continuous radial porosity gradient. Polymeric foams templates can be used to do so. Such polymeric template with a continuous radial porosity gradient may be produced by polymerisation of polymer precursors.

The reactions may be exothermic or endothermic.

In the case of an endothermic catalytic reaction (Steam reforming or dry reforming), the heat transfer from the vessel (tubular reactor wall) to the catalytic bed is a key point for the improvement of this process. It is essential to forward as fast as possible the heat necessary for the reaction. In this case, there is not any problem of selectivity linked to the temperature. By consequence, the heat transfer must be the best as possible on all the height of the tube to allow a decrease of the height or an increase of the flow rate (the reaction yield). The axial gradient can solve this problem.

In addition, to prevent possible bypass between the foam and the tube, an increase of the turbulence provided by the foam specific architecture can be a solution. This increase of the turbulence may result of a control of the architecture of the catalytic foam, for instance the number of ppi (pore per inch) along the radial direction.

In the case of an exothermic catalytic reaction (methanol production, methanol transformation, hydrogen production by catalytic partial oxidation, oxidative reaction, Fisher-Tropsch, etc), the heat transfer from the catalytic bed to the vessel is a key point for the stability of the process. A temperature increase of the catalytic bed due to the exothermic reaction and the low efficiency of the heat transfer, induces drop of product selectivity and process lifetime. By consequence, the heat transfer must be favoured on all the height of the tube. The specific architecture of the foam, especially the turbulence generation can favour the heat transfer from the catalytic bed to the vessel.

**Claims**

1. Architecture comprising ceramic or metallic foam, **characterized in that** the foam has at least one continuous and/or discontinuous, axial and/or radial porosity gradient ranging from 10 to 90%, and a pore size from 2 ppi to 60 ppi, and **in that** the architecture has a microstructure comprising specific area ranging between 0,1 to 30 $m^2$/g, a grain size between 100 nm and 20 microns and a skeleton densification above 95%.

2. Architecture according to claim 1, **characterized in that** the architecture is in itself a stand catalytic active bed or a support on which an active catalytic layer may be deposited.

3. Process for the preparation of a ceramic foam having at least one continuous and/or discontinuous, axial and/or radial porosity gradient ranging from 10 to 90%, and a pore size from 2 ppi to 60 ppi, comprising the following successive steps:

   a) Choosing at least one polymeric sponge, with a continuous and/or discontinuous porosity gradient ranging from 10 to 90%, associated to a pore size from 2 ppi to 60 ppi.
   b) Preparing the ceramic slurry with ceramic particles, solvent and at least an organic and/or inorganic additive,
   c) Impregnation of the polymeric sponge of the step a) by the ceramic slurry of the step b),
   d) Drying of the impregnated polymeric sponge,
   e) Pyrolysing the organic compounds including the dried polymeric sponge, and
   f) Sintering the ceramic particles after the step e),

   **characterized in that** a pre-step of formation of a porosity gradient on the sponge is introduced before the step a), and provided that if the polymeric sponge of step a) does not have a porosity gradient, the pre-step is compulsory.

4. Process according to claim 3, **characterized in that** the pre-step is chosen among:

   ■ thermo-compressing one edge of the polymeric sponge to induce a higher deformation of a given part of the sponge; or
   ■ piling up sponges with different porosities; or
   ■ stacking sponges cylinders with different porosity, the inner cylinders being joined to the outer ones.

5. Process according to one of claims 3 to 4, **characterized in that** the polymeric sponge is in a material selected among poly(urethane), poly(vinyl chloride), polystyrene, cellulose and latex, preferably in poly(urethane).

6. Process according to one of claims 3 to 5, **characterized in that** ceramic particles have a size between 100 nm and 10 microns and that the ceramic slurry contains between up to 60 vol.% of ceramic particles.

7. Process according to one of claims 3 to 6, **characterized in that** at the step b) the additive is chosen among binders, rheological agents, antifoaming agents, wetting agents, flocculating agents, air-setting agents and dispersing agents.

8. Process according to one of claims 3 to 7, **characterized in that** after the step c) the impregnated foam can be compressed, centrifuged or passed through rollers.

9. Process according to one of claims 3 to 8, **characterized in that** the ceramic particles are oxide-based materials selected among or a mixture of: alumina ($Al_2O_3$) and/or doped-alumina (La(1 to 20 wt.%)-$Al_2O_3$, Ce-(1 to 20 wt.%)-$Al_2O_3$, Zr(1 to 20 wt.%)-$Al_2O_3$), magnesia (MgO), spinel ($MgAl_2O_4$), hydrotalcite, CaO, zinc oxide, cordierite, mullite, aluminum titanate, and zircon ($ZrSiO_4$).

10. Process according to one of claims 3 to 8, **characterized in that** the ceramic particles are non-oxide-based materials selected among or a mixture of : silicon carbide (SiC), silicon nitride ($Si_3N_4$), SiMeAlON materials where Me is a metal such Y and La.

11. Process according to one of claims 3 to 9, **characterized in that** the ceramic particles_are in a ionic conductive oxide selected among Ceria ($CeO_2$), Zirconia ($ZrO_2$), stabilized ceria ($Gd_2O_3$ between 3 and 10 mol% in zirconia) and zirconia ($Y_2O_3$ between 3 and 10 mol% in zirconia) and mixed oxides of the formula (I):

$$Ce_{(1-x)} Zr_x O_{(2-\delta)} \qquad (I),$$

wherein $0 < x < 1$ and $\delta$ ensures the electrical neutrality of the oxide, or doped mixed oxides of the formula (II):

$$Ce_{(1-x-y)} Zr_x D_y O_{2-\delta} \qquad (II),$$

wherein D is selected from Magnesium (Mg), Yttrium (Y), Strontium (Sr), Lanthanum (La), Presidium (Pr), Samarium (Sm), Gadolinium (Gd), Erbium (Er) or Ytterbium (Yb); wherein $0 < x < 1$, $0 < y < 0;5$ and $\delta$ ensures the electrical neutrality of the oxide.

12. Process according to claim 11, **characterized in that** the ceramic particles includes an active phase based selected from Ruthenium (Ru), Rhodium (Rh), Palladium (Pd), Rhenium (Re), Osmium (Os), Iridium (Ir) Platinum (Pt) or combinations thereof.

13. Process according to claim 9, **characterized in that** the ceramic particles includes an active phase based selected from Nickel (Ni), Cobalt (Co), Copper (Cu), Iron (Fe), Chromium (Cr) and/or noble metal(s) selected from Rh, Pt, Pd, or combinations thereof.

14. Ceramic foam with a longitudinal and/or radial, continuous and/or discontinuous porosity gradient obtainable by the process according to one of claims 3 to 14.

15. Metallic foam with longitudinal and/or radial continuous and/or discontinuous porosity gradient.

16. Use of the ceramic or metallic foam according to claim 14 or claim 15 in heterogeneous catalysis.

17. Use of ceramic or metallic foam according to claim 14 or claim 15, as a catalytic active bed in hydrocarbons Steam Reforming, hydrocarbons catalytic partial oxidation, hydrocarbons dry reforming, methanol production, methanol transformations, or oxidative reactions.

Figure 1a

Figure 1b

Figure 1c

Catalytic
bed height

90 %

Middle part
of the bed

Porosity of the
catalytic bed

10 %

Catalytic
bed height

10 %

Middle part
of the bed

90 %

10 %

Porosity of the
catalytic bed

Catalytic
bed height

90 %

Middle part
of the bed

Porosity of the
catalytic bed

10 %

Catalytic
bed height

10 %

90 %

Middle part
of the bed

10 %

90 %

10 %

Porosity of the
catalytic bed

Figure 2a

Figure 2b

Figure 2c

Heating → decreasing graded porosity from the top to the bottom

Figure 3

Figure 4

Europäisches
Patentamt

European
Patent Office

Office européen
des brevets

# EUROPEAN SEARCH REPORT

Application Number

EP 08 15 6090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/052084 A (ARISTOTLE UNIVERSITY THESSALON [GR]; INCO LTD [CA]; SAMARAS ZISSIS [GR] 10 May 2007 (2007-05-10) * claims 5,6,9-12 * | 15 | INV. C04B38/06 B01D39/20 B01J35/00 |
| Y | * page 2 - page 3 * | 1-9, 11-13, 16,17 | B01J37/02 |
| X | DE 103 46 267 A1 (DAIMLER CHRYSLER AG [DE]) 28 April 2005 (2005-04-28) * claims 12,14,16,17; figure 3 * | 14,15 | |
| Y,D | US 4 810 685 A (TWIGG MARTYN V [GB] ET AL) 7 March 1989 (1989-03-07) <br><br> * the whole document * | 1-9, 11-13, 16,17 | |
| Y | EP 1 593 757 A (UNITED TECHNOLOGIES CORP [US]) 9 November 2005 (2005-11-09) <br><br> * column 7, paragraph 25 * | 1-9, 11-13, 16,17 | |
| Y | WO 2006/061390 A (AIR LIQUIDE [FR]; CHARTIER THIERRY [FR]; DEL GALLO PASCAL [FR]; ETCHEG) 15 June 2006 (2006-06-15) * the whole document * | 1-9, 11-13, 16,17 | TECHNICAL FIELDS SEARCHED (IPC) <br><br> C04B B01J B01D |

The present search report has been drawn up for all claims

| Place of search | Date of completion of the search | Examiner |
|---|---|---|
| Munich | 29 September 2008 | Bonneau, Sébastien |

EPO FORM 1503 03.82 (P04C01)

**ANNEX TO THE EUROPEAN SEARCH REPORT
ON EUROPEAN PATENT APPLICATION NO.**                    EP 08 15 6090

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2008

| Patent document cited in search report | | Publication date | Patent family member(s) | | Publication date |
|---|---|---|---|---|---|
| WO 2007052084 | A | 10-05-2007 | CA | 2627107 A1 | 10-05-2007 |
| | | | EP | 1951403 A1 | 06-08-2008 |
| | | | GR | 20050100558 A | 23-05-2007 |
| | | | US | 2008209872 A1 | 04-09-2008 |
| DE 10346267 | A1 | 28-04-2005 | NONE | | |
| US 4810685 | A | 07-03-1989 | CA | 1304068 C | 23-06-1992 |
| | | | DE | 3765377 D1 | 08-11-1990 |
| | | | DK | 171038 B1 | 29-04-1996 |
| | | | EP | 0260826 A1 | 23-03-1988 |
| | | | US | 4863712 A | 05-09-1989 |
| EP 1593757 | A | 09-11-2005 | CA | 2504449 A1 | 06-11-2005 |
| | | | JP | 2005350341 A | 22-12-2005 |
| | | | KR | 20060047714 A | 18-05-2006 |
| | | | US | 2005249602 A1 | 10-11-2005 |
| WO 2006061390 | A | 15-06-2006 | CN | 101072627 A | 14-11-2007 |
| | | | EP | 1827663 A1 | 05-09-2007 |
| | | | FR | 2879185 A1 | 16-06-2006 |
| | | | JP | 2008522801 T | 03-07-2008 |
| | | | US | 2006127656 A1 | 15-06-2006 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4777153 A
- US 4883497 A
- US 5762737 A
- US 5846664 A
- US 5902429 A
- US 4780437 A
- FR 2817860

**Non-patent literature cited in the description**

- **Roy W.Rice.** Porosity of ceramics. Marcel Dekker, 1998, 20-21
- **O. Lyckfeldt ; E.Liden ; R.Carlsson.** Processing of thermal insulation materials with controlled porosity. *Low Expansion Materials,* 217-229
- **S. F. Corbin ; P.S. Apté.** *J.Am.Ceram.Soc,* 1999, vol. 82 (7), 1693-1701